# EUROPEAN PATENT APPLICATION

(11) **EP 1 217 817 A1**
(43) Date of publication of application: **26.06.2002**
(21) Application number: 00830848.8
(22) Date of filing: 22.12.2000
(51) Int. Cl.: H04N 1/00

(54) **Public use apparatus for images pick up and transmission**

(71) Applicant: Odorici, Roberto, 00052 Cerveteri, (Roma) (IT); Gasparelli, Maria Rita, 43100 Parma (IT)
(72) Inventor: Odorici, Roberto, 00052 Cerveteri, (Roma) (IT); Gasparelli, Maria Rita, 43100 Parma (IT)
(74) Representative: Botti, Mario

(57) **Abstract**

The invention relates to a postcard image taking and transmitting apparatus (1) for public use. The apparatus comprises a fixed station including a still camera or a movie camera imaging means; an analog-to-digital conversion means for the taken images; a user interface including an alphanumerical keypad (10) for a user to enter at least one address of delivery of said images through a data communication network; an electronic means (12) of real-time transmitting said images and/or sounds to the address specified by the user through said data communication network; and a computer-based payment teller device.

## Description

### Application field

This invention relates to an image taking and transmitting apparatus for public use.

The invention relates, particularly but not exclusively, to an apparatus of the above type which is intended for forwarding images in digital format through a data communication network. The description which follows will cover this specific application field for convenience of illustration only.

### Prior Art

As it is well known, it often happens that people on a pleasure tour, or travelling to some distant places from home for other reasons, wish to send greetings to acquaintances, friends and relatives from the visited places.

In order to satisfy this need, people commonly send postcards, which up to now represent the most simple, practical and inexpensive means of having a greetings message delivered by the widespread international post offices network.

While being advantageous and quite popular with people from all cultural extractions, this practice has several limitations as outlined here below.

First, the message may reach its destination many days after posting, depending on the mail service delivery schedules, the period of the year when the postcard is posted, and the long distance separating the sender from the addressee. This possibilities often result in the postcard sender coming back home even before his/her postcard reaches the greetings message addressee.

Another disadvantage is due on the fact that picture postcards are usually available with a limited range of alternative views of the places a traveler has visited, and in that a postcard subject cannot be personalized.

Furthermore, the space allotted for a written greeting message is not very ample.

Recent available intermediation services enable a user to send greeting messages through the data communication network known as Internet. These services allow the connection to a site and the selection of a postcard picture from a wide range of subjects.

While comfortably sitting at a computer station, the user can select an image of interest from the many available, and send that particular image by electronic mail with a greeting message added to it.

The last-mentioned communication system has a limitation of its own in that the image to be transmitted is selected on a computer-based facility regardless of whether the represented places on the postcard have been actually ever visited. Briefly, a user of such service does not need to reach the tourist places in question; even so, in view of utilizing the service in transit or in the tourist place, a potential user needs at least to carry with him/her a notebook computer, but also in this case he/she should be able to access the data communication network with the relevant difficulties of connection and accessing protocol, typical of the place where he/she is in that moment.

The underlying technical problem of this invention is to provide an image taking and transmitting apparatus for public use with structural and functional features appropriate to allow a user to take a picture or image of a landscape or scenery of his/her personal choice, personalize the image contents, and real-time transmit the image to one or more addressees, thereby overcoming the limitations of the procedures and apparatus disclosed with reference to the prior art.

Moreover, the apparatus should be of simple construction and operation, so that it can be used by a large number of people, who basically do not have specific technical skills.

### Summary of the Invention

The principle at the basis of the present invention is to provide an apparatus suitable for public use and including a means of taking still or movie camera images, which apparatus can real-time transmit such images through a data communication network to a panel of predetermined addresses of addressees specified by the user.

Advantageously, such an apparatus can be installed in the proximities of natural landscapes or monumental areas of captivating interest, and accessed by the public in much the same way as a vending machine.

Based on this principle, the technical problem is solved by an apparatus of the type previously indicated and defined in the attached Claim 1.

The features and advantages of the apparatus according to the invention will be apparent from the following description of an embodiment thereof, given by way of non-limitative example with reference to the accompanying drawings.

In such drawings:

### Brief Description of the Drawings

- Figure 1 shows a schematic view of an exemplary application of the inventive apparatus for public use.
- Figure 1A shows another schematic view of an exemplary application of the inventive apparatus for public use.
- Figure 2 shows a schematic perspective view of an operation end of the inventive apparatus, in a standby condition.
- Figure 3 shows a schematic perspective view of a modified embodiment of the operation end of the apparatus of Figure 2, in a working condition.

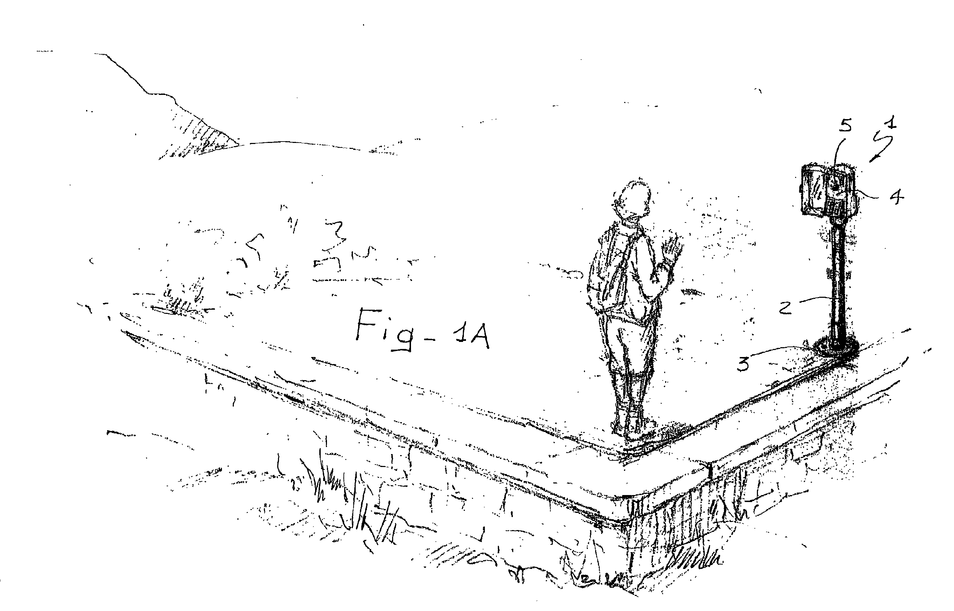

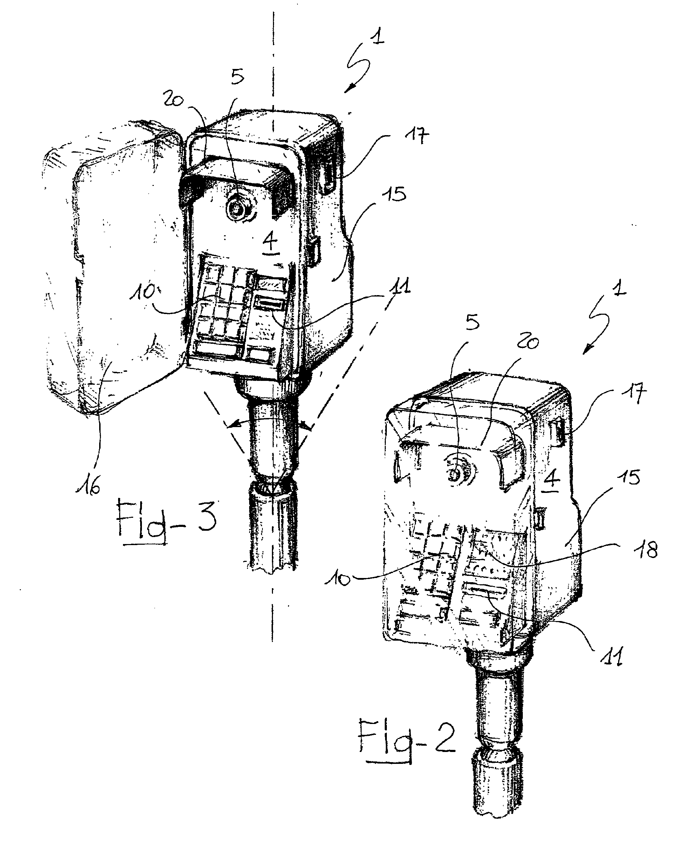

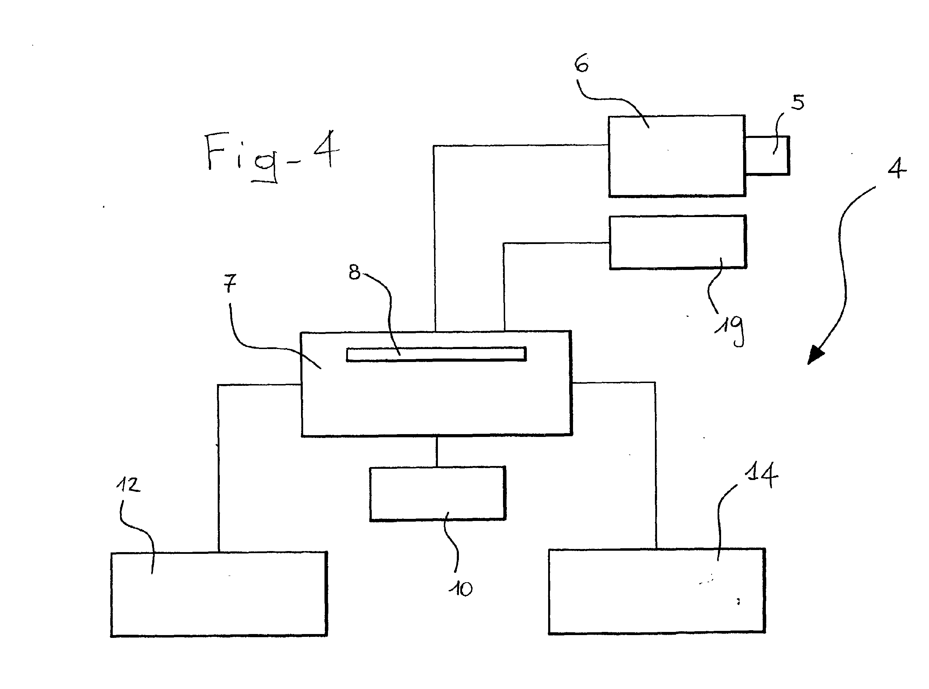

- Figure 4 is a schematic block view of the interior construction of the inventive apparatus.

### Detailed Description

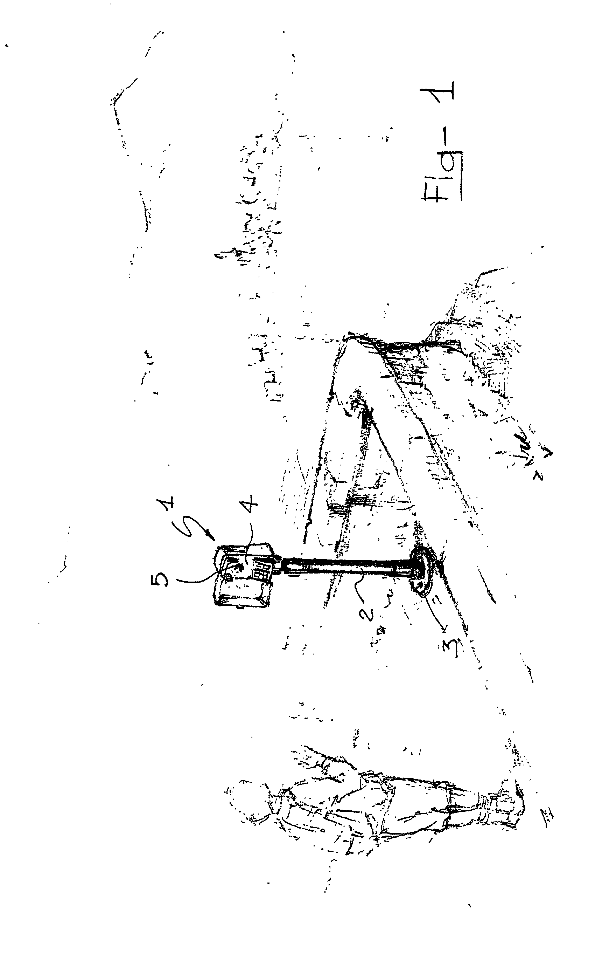

With reference to such drawings, in particular to the example shown in Figure 3, an apparatus for public use, according to this invention, is generally shown at 1 in schematic form and is adapted to take still or movie camera images and transmit them in real time.

More particularly, and in accordance with the invention, the apparatus 1 is intended for taking digital images against a background of natural landscape, but leaves the user free to customize both the image framing and themes. In the simplest of cases, a personalized image could portrait the user him/herself.

Advantageously in this invention, the images obtained with the apparatus 1 are at once transmitted to an e-mail addressee through a data communication network to which the apparatus 1 is interconnected.

For its public use applications, the apparatus 1 can be advantageously installed in the vicinities of monuments and areas of natural or sightseeing interest, either outdoors or indoors.

The apparatus 1 comprises a fixed station including a rod-like stanchion 2, vertically rising upwards from a base 3, and an operation end 4. Of course, a support other than the stanchion 2, extended in any direction, could be arranged to hold the apparatus 1 in its position of use.

The base 3 can be pinned to the ground by any of the conventional methods.

The operation end 4 of the apparatus 1 is articulated to the stanchion 2 to ease its spatial orientation, as shown in Figure 3.

The operation end 4 is contained in a case 15 which may be provided with a protection transparent cover 16. The cover 16 would be hinge-mounted to the case 15 and normally held closed by an automatic latch which is released after having introduced a coin or token through a slot 17 laterally provided in the case 15. Alternatively, different means of screening off or protecting the operation end 4 and of opening the cover 16 may be provided.

The operation end 4 includes a still camera means -- alternatively, a movie camera means -- for shooting pictures of the area in front of the apparatus 1. Such means would include an object lens 5 for shooting said images.

The object lens 5 may be that of a TV camera, or preferably that of a digital still camera 6 incorporating CCD optical sensors for directly imaging in the digital format. The object lens 5 is provided with an eave 20 for weather protection.

The camera 6 is controlled by an electronic device 7 incorporated in the apparatus 1, specifically in the operation end 4 thereof.

The electronic device 7 comprises an ALU (Arithmetic Logic Unit), e.g. a microcontroller 8, controlling and monitoring the apparatus operation. Volatile and non-volatile memory units are arranged to cooperate with the microcontroller and may be incorporated to the latter.

An alphanumerical keypad or keyboard 10 is mounted on the operation end 4 and connected to the microcontroller 8 through an interface. The keypad 10 is of the same kind as that used with digital telephone sets.

The keypad 10, the microcontroller 8, and the relevant interface jointly constitute a user's interface for acquiring an address where to deliver or transmit the images through a data communication network.

An analog-to-digital conversion means 13 is provided in the electronic device 7 for converting the still or movie shots. This means 13 may be a graphic card or a video card allowing the images to be digitized for more convenient transmission through a data communication network.

In a preferred embodiment, the delivery address is an e-mail address of Internet. However, the delivery address could be an address for accessing any other existing or foreseeable data communication systems.

Also provided inside the apparatus 1 is a means 12 for real-time transmitting, on said data communication network, digitized images to the delivery address specified by the user.

This means may be a wire interconnection to the data communication network or to a network interconnection node located close to a set of fixed stations of the apparatus 1. Alternatively, the node could be interconnected to the data communication network by satellite or radio waves link, or else.

The apparatus 1 also includes a payment teller device for the service. For example, a slot 11 may be arranged to receive coins, tokens, credit cards, or any other means of effecting a payment commonly used with vending machines or apparatus for public use.

Inside the operation end 4 is a transducer 14 which is associated with the slot 11 to sense the presentation of the payment means through the slot 11.

Obviously, the transducer would be connected to the microcontroller 8 via a respective interface.

The apparatus 1 may optionally include a display means or a display screen, as shown at 18 in Figures 3 and 2, respectively. The display screen is useful to check the framing of a video "postcard" before it is entered to the data communication network. In addition, a small printer may be provided to issue a receipt.

The operation of the apparatus according to the invention will now be described.

The apparatus 1 allows still or movie shots to be taken. For this purpose, a user can directly access the apparatus 1 or upon authorization to raise the cover 16. The authorization would be obtained by introducing a coin through the slot 11.

The user could pay in advance for the service by means of a pre-paid card, an ATM card, or a bankcard, to be introduced through the slot 11.

The payment thus effected will give access to the keypad 10 for typing one or more e-mail addresses of possible addressees of a greeting message to be accompanied by a postcard picture yet to be shot.

The completion of the above operations sets the apparatus 1 for shooting a still picture or a movie sequence of the desired scenery, it being possible for the user to step in front of the shooting apparatus as shown in Figure 1A, for example.

The shot is then converted to a digital format for the user to enter along with the e-mail message in order to have both forwarded to the previously specified addressees.

The image is processed and transmitted through the electronic mail service in a fully automated manner, with a technically unskilled user only being required to follow simple instructions.

The apparatus 1 may be equipped with a loudspeaker to periodically broadcast, in different languages, the simple sequence of instructions for use of the apparatus. In addition, a microphone 19 may be connected to the electronic device 7 to add an optional sound note to the e-mail message.

The apparatus of this invention basically enables personalized postcard images to be forwarded through the Internet e-mail service.

Thus, greeting messages can be sent in real time to several addressees from many localities and at a fairly low cost.

The construction of the inventive apparatus is simple and cost-effective, easy to use, and suitable for installation by public or private organizations for educational or recreational purposes.

## Claims

1. An image taking and transmitting apparatus (1) for public use, **characterized in that** it comprises:
- a fixed station including a still or movie camera imaging means;
- an analog-to-digital conversion means for the taken images;
- a user interface including an alphanumerical board (10) for a user to enter at least one delivering address of said images through a data communication network; and
- an electronic means (12) for real-time transmitting said images to the addressee specified by the user through said data communication network.

2. An apparatus according to Claim 1, **characterized in that** said station includes a stanchion support (2) and an operation end (4) articulated to the support.

3. An apparatus according to Claim 1, **characterized in that** said still camera means comprises a digital still camera.

4. An apparatus according to Claim 1, **characterized in that** said movie camera means comprises a TV camera.

5. An apparatus according to Claim 1, **characterized in that** said analog-to-digital conversion means is incorporated to an electronic device (7) associated with the still or movie camera means and coupled to the data communication network.

6. An apparatus according to Claim 5, **characterized in that** said electronic device (7) is a microcontroller (8).

7. An apparatus according to Claim 1, **characterized in that** said keyboard (10) is a telephone-type keypad.

8. An apparatus according to Claim 1, **characterized in that** said delivery address is an Internet e-mail address.

9. An apparatus according to Claim 1, **characterized in that** it is either connected directly in the data communication network or connected to an interconnection node provided with a means of coupling to the data communication network.

10. An apparatus according to Claim 1, **characterized in that** it comprises a payment teller device provided with an actuation slot (11) and an associated payment receive transducer (14).

11. An apparatus according to Claim 1, **characterized in that** it comprises a small display means (18) or a display screen.
